# EUROPÄISCHE PATENTANMELDUNG

(11) **EP 2 746 220 A2**
(43) Veröffentlichungstag der Anmeldung: **25.06.2014**
(21) Anmeldenummer: 13199127.5
(22) Anmeldetag: 20.12.2013
(51) Int. Cl.: C01B 25/45, C01G 23/00, H01G 11/32, H01G 11/50, H01M 4/04, H01M 4/36, H01M 4/485, H01M 4/58, H01M 4/62, H01G 11/06, H01M 10/0525, H01M 12/00, H01M 16/00, H01M 4/02

(54) **Mit einem Interkalationsmaterial beschichtete Partikeln mit großer Oberfläche, Verfahren zu deren Herstellung sowie Verwendung der Partikeln in Hybridelektroden und hochkapazitativen Doppelschichtkondensatoren und schnellen Batterien**

(30) Priorität: 21.12.2012 DE 102012112909
(71) Anmelder: Fraunhofer-Gesellschaft zur Förderung der angewandten Forschung e.V., 80686 München (DE)
(72) Erfinder: Guntow, Uwe, 97076 Würzburg (DE); Anfimovaite, Vilija, 97072 Würburg (DE); Kapuschinski, Martina, 97082 Würzburg (DE); Uebe, Jochen, 97072 Würzburg (DE)
(74) Vertreter: Olgemöller, Luitgard Maria

(57) **Zusammenfassung**

Die Erfindung betrifft ein Verfahren zum Herstellen eines partikelförmigen Hybridmaterials zum Einsatz in der negativen Elektrode von Lithiumbatterien und -akkumulatoren, umfassend Teilchen mit einem Grundgerüst aus Kohlenstoff, die mit einer phasenreinen Beschichtung aus Li_{4-y}A_{y}Ti₅₋ₓMₓO₁₂, versehen sind, worin das Ion A ausgewählt ist unter ½ Mg, ½ Ca, 1/3 Al oder Mischungen davon, das Übergangsmetallion M ausgewählt ist unter 4/a Ge, Co, Fe, Co, Ni, Mn, Cr, Zr, Mo, V, Ta oder Mischungen davon, wobei a die Oxidationszahl des Übergangsmetallions bedeutet, x 0 oder eine beliebige Zahl von >0 bis 4 ist und y 0 oder eine ungerade oder gerade Zahl von >0 bis 3 bedeutet, oder Teilchen mit einem Grundgerüst aus Kohlenstoff, die mit einer phasenreinen Beschichtung aus Li_{1-y}A_{y}Fe₁₋ₓBₓPO₄, versehen sind, worin A ein Alkaliion, ½ Erdalkalimetallion oder 1/3 Ion, ausgewählt unter den Ionen der Lanthaniden La, Ce, Gd, Pr, Nd, Sm, Er ist, B ein Kation ist, ausgewählt unter 2/a Ni, Mn, V, Co, Sn, Ti, Cr, Cu, Sr, Ca, Ba, Zn und Mischungen davon, wobei a die Oxidationszahl des Kations B bedeutet, und x von 0 oder eine beliebige Zahl von >0 bis 0,8 und y von 0 oder eine beliebige Zahl von >0 bis 1 bedeuten, wobei die Herstellung durch Solvothermal-Synthese in Gegenwart eines Komplexbildners erfolgt, bei dem es sich im ersten Falle um ein Diol handelt.

## Beschreibung

Die vorliegende Erfindung betrifft ein "Batterie"-Material, das eine Faraday'schen Speicherung von Energie ermöglicht, z.B. LiFePO₄ oder Li₄Ti₅O₁₂, in Kombination mit einem Basismaterial (einem Aktivkohlenstoff) mit hoher Oberfläche, das eine elektrostatische Speicherung von Energie ermöglicht, sowie ein Verfahren zu dessen Herstellung. Diese Materialkombination hat die Gestalt von hochporösen, mit dem Speichermaterial beschichteten Nanopartikeln, die auf dem Weg der Solvothermalsynthese zugänglich sind und ggf. mit weiteren Materialien gemischt werden können, um Hybridelektroden herzustellen. Die Erfindung betrifft des Weiteren die Verwendung der Partikel in einem Hybridkondensator, der eine derartige Hybridelektrode sowie einen Elektrolyten umfasst.

Der breite Einsatz heute bestehender elektrischer Energiespeichersysteme unterliegt Beschränkungen der verfügbaren Speichertechnologie. Im Wesentlichen wird zwischen zwei Technologien unterschieden: Faraday'schen Speichern (Batterien, z.B. Li-Ionen Batterien) und elektrostatischen Speichern (Doppelschichtkondensatoren). Li-Ionen Batterien verfügen über hohe Energiedichten (> 100 kW/kg), sind jedoch in Ihrer Leistungsfähigkeit, ihrer Zyklenzahl und ihrem Temperatureinsatzbereich eingeschränkt. Doppelschichtkondensatoren weisen deutlich höhere Zyklenraten und breitere Temperaturspektren auf, verfügen jedoch für viele Anwendungen über eine zu geringe spezifische Energie. Mit der Vielzahl der möglichen Anwendungen steigen jedoch die Anforderungen an die Energiespeicher: Während die Standardanwendungen bei Raumtemperatur laufen, reicht der von der Automobilindustrie gewünschte Temperaturbereich von -40 bis +140°C.

Lithiumionenbatterien (LIB) erobern seit ihrer Markeinführung im Jahr 1992 immer größere Anteile am Batteriemarkt. Lithiumionen- und Nickelmetallhydridbatterien weisen durch ihre hohe Zellspannung in Kombination mit dem Prozess des Faraday'schen Speicherns sehr hohe Energiedichten auf. Bei den letztgenannten Anwendungen kommt die klassische Lithiumionenbatterie im wahrsten Sinne des Wortes an ihre Leistungsgrenzen: Die entnehmbaren Stromdichten sind durch die Verwendung organischer Elektrolyte mit vergleichsweise geringer Leitfähigkeit und durch die Festkörperdiffusionsvorgänge der für die Elektroden verwendeten Lithium-Interkalationsverbindungen limitiert und führen zu geringen Leistungsdichten. Das Feld der hohen Leistungsdichten beherrschen die elektrochemischen Doppelschichtkondensatoren (DSK). Diese nutzen zur Ladungsspeicherung die Ladungstrennung der elektrochemischen Doppelschicht an Aktivkohlenstoffen hoher spezifischer Oberfläche (> 2000 m²/g) und optimierter Porosität. Da aber nur die Oberfläche der Partikel zur Ladungsspeicherung verwendet wird, ist die Energiedichte der Doppelschichtkondensatoren Größenordnungen unter der der Lithiumionenbatterien.

Das Aktivmaterial in der Elektrode ist der Ort, an dem bei Doppelschichtkondensatoren die elektrostatische Ladungsspeicherung stattfindet. Die aktive Oberfläche sollte möglichst hoch sein und eine geeignete Porenstruktur aufweisen, die für die jeweiligen Kationen und Anionen des Elektrolyten zugänglich ist. Um die notwendigen mechanischen, chemischen und elektrochemischen Stabilitäten zu erreichen, wird überwiegend Kohlenstoff als Aktivmaterial eingesetzt. Das für die Ausbildung solcher Doppelschichten genutzte Material wird nachfolgend als "Basismaterial" bezeichnet.

Es gibt viele Ansatzpunkte, um die Lithiumionenbatterien in Bezug auf Leistungsdichte, Temperaturbereich und Sicherheit zu verbessern. Allerdings zieht eine Verbesserung der einen Eigenschaft häufig eine Verschlechterung einer anderen Eigenschaft nach sich. Ein derzeit viel untersuchtes System ist die Kombination Li₄Ti₅O₁₂ (LTO) als Anodenmaterial und LiFePO₄ (LFP) als Kathodenmaterial. Diese Substanzen werden als Submikro- oder Nanomaterialien eingesetzt und werden aufgrund ihrer schlechten elektronischen Leitfähigkeit häufig mit leitfähigem Kohlenstoff beschichtet. Man nutzt die kleinen Partikelgrößen für eine schnelle Lithium-Ein- und Auslagerung und die Stabilität des LiFePO₄ zur Verbesserung der Sicherheit, da es im Gegensatz zum meist verwendeten LiCoO₂ überladesicher ist und aufgrund des fest gebundenen Sauerstoffs beim Brand der Zelle die Verbrennung nicht fördert. Die Vorteile der höheren Leistungsdichte und verbesserten Sicherheit gehen aber mit einer Einbuße beim Hauptvorteil der Lithiumionen-Batterien einher, nämlich einer deutlichen Verringerung der Energiedichte durch die von knapp 4 V auf ca. 2 V verkleinerte Zellspannung.

Das Prinzip einer schnellen Hybridbatterie wurde von G. Amatucci erstmals im Jahr 2001 vorgestellt (J. Electrochem. Soc. 2001, 148 (8), A930; US Patent 6,252,762, 2001). Darin wurde eine Lithiumionen-Interkalationsanode aus Li₄Ti₅O₁₂ gegen eine Kathode aus Aktivkohlenstoff für elektrochemische Doppelschichtkondensatoren (DSK) geschaltet. Problematisch war die wegen mangelnder Energiedichte limitierende Kathode, die sich aufgrund der vorgegebenen physikalischen Eigenschaften von Aktivkohlenstoff wie BET-Oberfläche und Porengrößenverteilung nicht steigern ließ. Später wurde vom selben Autor die Innovation teilweise zurückgenommen und die Kathode durch ein Komposit aus einem Lithiumionen-Interkalationsmaterial (LiCoO₂) und Aktivkohlenstoff ersetzt, sodass letztendlich beide Elektroden Batteriematerialien enthielten (J. Power Sources 2004, 136, 160).

Das koreanische Patent-Abstract mit der Veröffentlichungs-Nr. 1020080029480 schlägt vor, die positive Elektrode einer Lithium-Sekundärbatterie bzw. eines Hybrid-Kondensators auf Basis von Lithiumtechnologie unter Verwendung einer Mischung aus einem ersten Material, das Lithiumionen interkalieren/deinterkalieren kann, und einem zweiten, kohlenstoffhaltigen Material herzustellen. In gleicher Weise soll die negative Elektrode gebildet werden, wobei anstelle des interkalierenden/deinterkalierenden Materials auch Material eingesetzt werden kann, das mit Lithium eine Legierung bildet.

Aus US 2008/02471178 A1 und US 2010/0176767 A1 sind Kompositmaterialien zum Einsatz in Elektroden bekannt, in denen eine monolithische Kohlenstoff-Struktur mit einem metallischen Oxid belegt ist. Gemäß US 2011/0281157 A1 sei eine Verbesserung dieser Komposite dadurch zu erreichen, dass das Elektrodenmaterial aus einer hochporösen Kohlenstoff-"Meta"-Struktur besteht, die mit einem Film aus einem oder mehreren Übergangsmetalloxiden beschichtet ist. Aufgrund der dünnen Schicht des Metalloxides erfolge die Interkalation schneller, weil das gesamte Material für Li-Ionen schneller erreichbar sei, während das Kohlenstoffsubstrat eine sehr hohe elektronische Leitfähigkeit aufweise. Die poröse Kohlenstoff-Metastruktur wird mit Hilfe eines Redox-Prozesses beschichtet, wobei von einer wässrigen Metallsalz-Lösung ausgegangen wird. Diese kann im Temperaturbereich von bis zu 250°C eingesetzt werden; ggf. kann ein Autoklav benutzt werden. Unter den explizit genannten Ausgangssubstanzen hierfür finden sich auch verschiedene Titan- und Eisen-Komplexe wie Titan-bis-acetylacetonate, Titan(IV)ethoxid, und Eisen(II)-acetylacetonat; unter den explizit genannten Produkten findet sich Li₄M₅O₁₂/C, wobei M für Titan oder für mit Niob und/oder Tantal und/oder Vanadium dotiertes Titan stehen kann.

J. Chen et al., Solid State lonics 178 (2008) 1676-1693, beschreiben die Herstellung von Lithiumeisenphosphat und vergleichbaren Materialien, die in Zukunft das derzeit verwendete, teure Lithiumkobaltoxid ersetzen könnten. Bei der Herstellung von Lithiumeisenphosphat sei die Wahl der geeigneten Temperatur heikel, um stöchiometrisches Material in Olivinstruktur zu erhalten. Erst oberhalb von 180°C sei dies möglich, wobei Ascorbinsäure verwendet wurde, um die Bildung von Eisen(II) in der wässrigen Umgebung zu verhindern. Andernfalls können sich Eisenatome an einem Teil der Plätze des Lithiums befinden, was die Diffusion von Lithium in die Tunnelstruktur erschwert.

Die Erfinder der vorliegenden Erfindung haben festgestellt, dass sich mit der bekannten Solvothermalsynthese zwar Lithiumtitanate und Lithiumeisenphosphate auf einer porösen Kohlenstoff-Unterlage abscheiden lassen; diese erwiesen sich jedoch nicht als phasenrein.

Die Aufgabe der Erfindung liegt dementsprechend darin, ein Solvothermal-Syntheseverfahren bereitzustellen, mit dem sich partikelförmige Hybridmaterialien herstellen lassen, umfassend Teilchen mit einem Kohlenstoff-Grundgerüst sowie einer darauf abgeschiedenen, phasenreinen Schicht eines Materials, das Lithiumionen inter- und deinterkalieren kann, ausgewählt unter Lithiumtitanoxiden und -mischoxiden der Formeln Li_{4-y}A_{y}Ti₅₋ₓMₓO₁₂, worin das Ion A ausgewählt ist unter ½ Mg, ½ Ca, 1/3 Al oder Mischungen davon, das Übergangsmetallion M ausgewählt ist unter 4/a Ge, Co, Fe, Ni, Mn, Cr, Zr, Mo, V, Ta oder Mischungen davon, wobei a die Oxidationszahl des Übergangsmetallions bedeutet, x = 0 ist oder eine beliebige Zahl von >0 bis 4 bedeutet und y = 0 ist oder eine beliebige Zahl von >0 bis 3 bedeutet, und Lithiumeisenphosphaten, ausgewählt unter solchen der Formel Li_{1-y}A_{y}Fe₁₋ₓBₓPO₄, worin A ein Alkaliion, ½ Erdalkalimetallion oder 1/3 Ion, ausgewählt unter den Ionen der Lanthaniden La, Ce, Gd, Pr, Nd, Sm, Er und Mischungen davon ist, B ein Kation ist, ausgewählt unter 2/a Ni, Mn, V, Co, Sn, Ti, Cr, Cu, Sr, Ca, Ba, Zn und Mischungen davon, wobei a die Oxidationszahl des Kations B bedeutet, x = 0 ist oder eine beliebige Zahl von >0 bis 0,8 bedeutet und y = 0 ist oder eine beliebige Zahl von >0 bis 1 bedeutet.

In Lösung der Aufgabe schlägt die Erfindung ein Solvothermal-Herstellungsverfahren mit anschließender thermischer Behandlung der Produkte vor, wobei das Solvothermal-Verfahren in allen Fällen dadurch gekennzeichnet ist, dass die erforderlichen Ausgangsmaterialien in einem wässrigen Lösungsmittel oder in Wasser gelöst bzw. dispergiert werden, wobei das für die Herstellung benötigte Lithium in Form von LiOH und weiterhin mindestens ein organischer Komplexbildner zugesetzt werden, bei dem es sich im Falle der Herstellung eines Lithiumtitanoxids oder -mischoxids um ein Diol und im Falle der Herstellung eines Lithiumeisenphosphats vorzugsweise um eine Carbonsäure handelt.

Des Weiteren stellt die Erfindung erstmals ein partikelförmiges Hybridmaterial bereit, umfassend Teilchen mit einem Kohlenstoff-Grundgerüst sowie einer darauf abgeschiedenen phasenreinen Schicht eines Materials, das Lithiumionen inter- und deinterkalieren kann, ausgewählt unter Lithiumtitanoxiden und -mischoxiden der Formel Li_{4-y}A_{y}Ti₅₋ₓMₓO₁₂ worin das Ion A ausgewählt ist unter ½ Mg, ½ Ca, 1/3 Al oder Mischungen davon, das Übergangsmetallion M ausgewählt ist unter 4/a Ge, Co, Fe, Ni, Mn, Cr, Zr, Mo, V, Ta oder Mischungen davon, wobei a die Oxidationszahl des Übergangsmetallions bedeutet, x = 0 ist oder eine beliebige Zahl von >0 bis 4 bedeutet und y = 0 ist oder eine beliebige Zahl von >0 bis 3 bedeutet, und Lithiumeisenphosphaten, ausgewählt unter solchen der Formel Li_{1-y}A_{y}Fe₁₋ₓBₓPO₄, worin A ein Alkaliion, ½ Erdalkalimetallion oder 1/3 Ion, ausgewählt unter den Ionen der Lanthaniden La, Ce, Gd, Pr, Nd, Sm, Er und Mischungen davon ist, B ein Kation ist, ausgewählt unter 2/a Ni, Mn, V, Co, Sn, Ti, Cr, Cu, Sr, Ca, Ba, Zn und Mischungen davon, wobei a die Oxidationszahl des Kations B bedeutet, x = 0 ist oder eine beliebige Zahl von >0 bis 0,8 bedeutet und y = 0 ist oder eine beliebige Zahl von >0 bis 1 bedeutet.

Unter diesen Materialien sind LiFePO₄ und Li₄Ti₅O₁₂ wegen ihrer bekannten guten Elektrodenmaterial-Eigenschaften (Stabilität, Lage der Normalpotentiale, Geschwindigkeit und Kapazität der Lithium-Ein- und Auslagerung und dgl.) jeweils stark bevorzugt. Günstig kann auch die Verwendung solcher Materialien sein, in denen die zusätzlichen Komponenten A, B und M jeweils nur in kleineren oder kleinen Anteilen (maximal 50 Mol-%, bevorzugt maximal 30 Mol-% und stärker bevorzugt maximal 10 Mol-% des höchstmöglichen Anteils) und/oder als sog. Dotanden, ggf. also nur in Spuren (maximal 5 Mol-%, bevorzugt maximal 1 Mol-% und stärker bevorzugt unter 1 Mol-%), vorhanden sind.

Das Hybridmaterial kann als Bestandteil entsprechender Elektroden und Hybridkondensatoren eingesetzt werden, da es sowohl ein Basismaterial mit sehr hoher Oberfläche als auch ein Material mit den Eigenschaften eines Faraday'schen Energiespeichers (ein Interkalationsmaterial für Lithium) aufweist. Das Grundgerüst aus Kohlenstoff dieser Partikel besitzt vorzugsweise eine sehr hohe Oberfläche (stärker bevorzugt im Bereich von 1200 m²g⁻¹, gemessen nach dem BET-Verfahren, DIN ISO 9277), die mit einer dünnen Schicht aus interkalationsfähigen Material belegt ist, wobei die Beschichtung derart aufgebracht ist, dass das Hybridmaterial nach Möglichkeit immer noch eine sehr hohe Oberfläche (vorzugsweise mindestens 600, häufig zwischen 800 und 1600 und in manchen Fällen sogar noch mehr, z.B. bis zu 2000 BET [m²g⁻¹]) besitzt, so dass es neben dem Gewinn an Energiespeicher-Kapazität durch das Faraday-Speichermaterial im Wesentlichen die hohe Energiedichte an Doppelschicht-Speicherung behält, die durch die Oberfläche des Basismaterials bereitgestellt wird.

Die Partikelgröße des Basismaterials ist dem Grunde nach nicht kritisch; wichtig ist jedoch, dass dessen Teilchen elektrisch leitfähig sind und eine hohe Oberfläche mit vielen offenen Poren (d.h. einer hohen Porosität) aufweisen, wobei die Porendurchmesser bevorzugt im Bereich von 1 bis 8 nm, stärker bevorzugt von 1 bis 4 oder 5 nm liegen. Hierfür ist eine Reihe von Aktivkohlenstoffen, wie sie kommerziell erhältlich sind, gut geeignet. Die Größe der Partikel liegt vorzugsweise im µm-Bereich, z.B. im Bereich von 5 bis 100 µm, vorzugsweise von 10 bis 70 µm.

Die Mischungsverhältnisse der beiden Komponenten, des Basismaterials und des interkalationsfähigen Materials, können beliebig eingestellt werden, sofern der Anteil an Basismaterial 1 Masse-% der Summe beider Materialien nicht unterschreitet. Auch der Anteil an Elektrodenmaterial mit Faraday'scher Speicherkapazität sollte nicht unter 1 Masse-% der Summe beider Materialien liegen. Günstig ist ein Masseverhältnis von Basismaterial zu Faraday-Speichermaterial von 1:99 bis 99:1, stärker bevorzugt von 20:80 bis 95:5 und besonders bevorzugt von 40:60 bis 90:10.

Weitere Gegenstände der vorliegenden Erfindung sind die Verwendung der erfindungsgemäßen Hybridpartikel in einer Hybridelektrode sowie in einem Hybridkondensator, der mindestens eine solche Hybridelektrode und einen Elektrolyten enthält. Sofern die Hybridelektrode des Hybridkondensators erfindungsgemäße Hybridpartikel enthält, die sich für die negative Elektrode eignen, wird als positive Elektrode vorzugsweise eine solche eingesetzt, die unter Verwendung von Kohlenstoffpartikeln hergestellt wurde, die mit einem Lithium-Interkalationsmaterial beschichtet sind, ausgewählt unter Verbindungen der nachfolgenden Zusammensetzungen:
(Li,A)(M,B)PO₄ (mit A und/oder B = Alkali-, Erdalkalimetall, La, Ce, Gd, Pr, Nd, Sm, Er; M = Fe, Co, Mn, Ni, Ti, Cu, Zn, Cr oder eine Kombination davon), wobei A und B jeweils fakultative Komponenten sind;
(Li,A)₂(M,B)PO₄F (A oder B = Alkali-, Erdalkalimetall, La, Ce, Gd, Pr, Nd, Sm, Er; M = Fe, Co, Mn, Ni, Ti, Cu oder eine Kombination davon), worin A und B jeweils fakultative Komponenten sind;
Li₃V₂PO₄; LiVPO₄F;
(Li,A)ₓ(M,N)_{z}SiO₄ (mit A = Alkali-, Erdalkalimetall, Bor; N, M = Al, Ti, Co, Fe, Co, Ni, Mn, Cr, Zr, Mo, V, Ta oder eine Kombination davon), worin A eine fakultative Komponente ist und nur ein Element M oder N vorhanden sein muss;
Li₂₋ₓAₓM_{1-y}N_{y}PO₄F (mit A = Mg, Ca, Al; M, N = Ti, Ge, Co, Fe, Co, Ni, Mn, Cr, Zr, Mo, V, Ta oder eine Kombination davon), worin x und y einen beliebigen Wert haben und gegebenenfalls jeweils 0 sein können.

Handelt es sich dagegen um eine positive Elektrode mit erfindungsgemäßen Hybridpartikeln, wird als negative Elektrode vorzugsweise eine solche eingesetzt, die unter Verwendung von Kohlenstoffpartikeln hergestellt wurde, die mit einem Lithium-Interkalationsmaterial beschichtet sind, ausgewählt unter Verbindungen der nachfolgenden Zusammensetzungen Li_{4-y}A_{y}Ti₅₋ₓMₓO₁₂ (mit A = ½ Mg, ½ Ca, 1/3 Al; 4/a M = Ge, Co, Fe, Co, Ni, Mn, Cr, Zr, Mo, V, Ta oder eine Kombination davon, wobei a die Oxidationszahl des Übergangsmetalls bedeutet), worin x und y unabhängig voneinander jeweils = 0 sein können oder einen beliebigen Wert von bis zu 5 (für x) bzw. von bis zu 4 (für y) haben können.

Besonders bevorzugt ist ein Kondensator mit ausschließlich Hybridelektroden, die erfindungsgemäße Partikel enthalten, wobei LiFePO₄ als Interkalationsmaterial für die positive Elektrode und/oder Li₄Ti₅O₁₂ als Interkalationsmaterial für die negative Elektrode ganz besonders bevorzugt sind.

Die Aufgabe, die sich die Erfinder gestellt hatten, war insofern eine große Herausforderung, weil nicht nur ein Beschichtungsprozess zum Erhalt der erfindungsgemäßen Partikel unter möglichst schonenden Reaktionsbedingungen stattfinden und bei niedrigen Temperaturen ablaufen sollte, um die Porosität und die hohe Oberfläche der Basismaterialien zumindest weitestgehend zu erhalten, sondern mit diesem Beschichtungsprozess auch ein phasenreine Beschichtung erhältlich sein sollte. Dieser Beschichtungsprozess sollte unbedingt für die Verwendung der besonders bevorzugten Materialien LiFePO₄ und Li₄Ti₅O₁₂ geeignet sein. In einem Übersichtsartikel von D. Jugovic und D. Uskokovic in Journal of Power Sources 190 (2009) 538-544 werden die unterschiedlichen Syntheserouten für LiFePO₄ zusammengefasst. Synthesen, die über Festkörperreaktionen ablaufen, benötigen Kalzinierungstemperaturen von bis zu 900°C und liefern ausschließlich Pulver. Als nasschemisches Verfahren steht unter anderem das Solvothermalverfahren zur Verfügung. Es hat gegenüber den Festkörperreaktionen entscheidende Vorteile: Die Edukte werden bereits auf molekularer Ebene gut vermischt, und die daraus resultierenden Produkte sind sehr homogen. In der Regel sind auch die für die Synthese notwendigen Temperaturen nicht so hoch wie für Festkörperreaktionen erforderlich. Auch eine Synthese über das Sol-Gel-Verfahren wäre dem Grunde nach geeignet, weil dabei relativ niedrige Kalzinierungstemperaturen bis 600°C realisiert werden können. In diesem Verfahren findet allerdings die Beschichtung der Basismaterialien ähnlich Core-Shell-Strukturen bevorzugt außen statt, während das innere Porensystem nur soweit beschichtet wird, wie es die Kapillarkräfte in den Poren zulassen, so dass der Bedeckungsgrad der Gesamtoberfläche deutlich schlechter ist. Außerdem besteht je nach Eigenschaft des eingesetzten Basismaterials die Gefahr, dass im Extremfall die Poren blockiert und somit für Lithiumionen unzugänglich werden.

Es hat sich dabei überraschend herausgestellt, dass sich mit Hilfe der Solvothermalsynthese nur dann hochaktive Teilchen mit einer sehr hohen äußeren und inneren Oberfläche erzeugen lassen, wenn deren Interkalationsmaterial unter Beachtung spezifischer Bedingungen (der Wahl spezifischer Ausgangsmaterialien für die Solvothermal-Synthese) synthetisiert wird. Ohne Beachtung dieser Bedingungen erhielten die Erfinder im Falle von Lithiumtitanat amorphe Beschichtungen, die beim Erhitzen Mischphasen aus Llthiumtitanat mit TiO₂ in Anatas- und Rutilform ergaben, während im Falle des Lithiumeisenphosphats zwar unmittelbar eine kristalline Beschichtung gebildet wurde, diese jedoch - zum Beispiel beim Nacharbeiten der Vorschrift von Chen et al., a.a.O., auf den Kohlenstoffpartikeln nicht als reines LiFePO₄ in Olivin-Struktur anfiel.

Bei der Solvothermalsynthese wird das Lösungsmittel (z. B. Wasser, dann wird die Synthese auch Hydrothermalsynthese genannt) mit den Edukten in einem Autoklaven unter hohem Druck und erhöhten Temperaturen (100 - 400°C) umgesetzt. Unter diesen Reaktionsbedingungen lösen sich viele Stoffe besser in dem jeweiligen Lösungsmittel als unter Normalbedingungen, sodass auch Reaktionen möglich sind, die sonst nicht stattfinden würden. Dabei lassen sich nanoskalige Morphologien erreichen, die auf "konventionellem" Wege nur schwer zugänglich sind. Zusätzlich zu den bereits genannten Vorteilen bietet die Solvothermalsynthese auch den Vorteil, dass die Beschichtung der Basismaterialien in einem einzigen Reaktionsschritt erreicht werden kann. Das erspart zusätzliche Prozessschritte.

Für das erfindungsgemäße Herstellungsverfahren über die Solvothermalsynthese werden die Edukte und das Basismaterial gemeinsam im Autoklaven umgesetzt. Dabei werden die besonderen Reaktionsbedingungen der solvothermalen Synthese ausgenutzt. Die Erfinder konnten feststellen, dass bei Verwendung dieses Verfahrens nicht nur die Außenhaut der Partikel des Basismaterials beschichtet wird, sondern dass auch das gesamte innere Porensystem beschichtet, dabei aber nicht "gefüllt" und verstopft wird. Somit steht praktisch die gesamte innere Oberfläche des Basismaterials zur Verfügung.

Eine wichtige Maßnahme bei der Herstellung der erfindungsgemäßen Partikel ist die Zugabe eines Komplexierungsmittels. Es hat sich herausgestellt, dass der Einsatz von in US 2011/0281157 vorgeschlagenen Ausgangsmaterialien nicht ohne weiteres zum gewünschten Ergebnis führt. So erhielten die Erfinder bei dem Versuch einer Solvothermal-Synthese unter Verwendung von Titan(IV)ethylat und LiOH als Ausgangsmaterialien in Ethanol, dem zur Hydrolyse Wasser zugesetzt wurde, eine amorphe Beschichtung, die beim nachträglichen Erhitzen in ein Material überführt wurde, das neben Lithiumtitanat deutliche Anteile von Anatas und Rutil enthielt. Gleiches ergab sich bei einem Zusatz von Lithiumacetylacetonat oder tertiärem Amin mit Alkohol-Gruppen. Bei der Nacharbeitung der Angaben von Chen et al. entstand zwar ein kristallines Material; die Röntgendiffraktrogramme zeigten jedoch, dass es sich dabei nicht um reines LiFePO₄ handelte.

Im Falle der Herstellung von Lithiumtitanaten sollte das Komplexierungsmittel ein Diol sein. Unter "Diol" soll erfindungsgemäß ein Alkohol verstanden werden, der zwei (und nicht mehr) Hydroxygruppen aufweist und gegebenenfalls weitere Gruppen wie Ketogruppen enthalten kann. Die beiden Hydroxygruppe sind vorzugsweise an Kohlenstoffatome gebunden, die in 1,3-Stellung zueinander stehen, so dass der Ligand die Gruppierung (H)O-C-C-C-O(H) aufweist, die für eine Chelatbildung günstig ist. Eine vicinale Stellung (1,2-Stellung) ist jedoch ebenfalls möglich. Ein C₄-C₈-Alkohol mit vorzugsweise einer Kettenlänge von bis zu 6 Kohlenstoffatomen, beispielsweise ein ggf. mit Methyl substituiertes 1,3-Butandiol oder 2,4-Pentandiol, ist besonders bevorzugt. Im Falle der Herstellung von Lithiumeisenphosphaten, die in stark saurer Umgebung stattfindet, ist ebenfalls ein Komplexbildner vonnöten, der aber nicht notwendigerweise ein Chelatbildner sein muss. Aufgrund der sauren Bedingungen ist eine Carbonsäure besonders geeignet; es kann sich dabei - bevorzugt - um eine Monocarbonsäure handeln, aber auch Dicarbonsäuren oder Ketocarbonsäuren sind möglich. Günstig ist das Vorhandensein von Ethergruppen im Säuremolekül, denn diese können über ihre freien Elektronenpaare komplexbildend, bei entsprechender Struktur der Carbonsäure ggf. auch chelatbildend wirken.

Im Falle der Herstellung eines Lithiumtitanats erfolgt die Umsetzung vorzugsweise in einem Alkohol wie Ethanol oder Methanol als Lösungsmittel, dem erst nach Auflösen der erforderlichen Komponenten (vorzugsweise ohne Zugabe weiterer die Reaktion beeinflussender Substanzen) Wasser zugegeben wird, so dass dann spätestens im Autoklaven die erforderlichen hydrolytisch beeinflussten Reaktionen ablaufen können. Das Mengenverhältnis von Lithium zu Titan ist nicht sehr kritisch; günstig ist ein leichter Überschuss (z.B. 10 bis 50 Mol-%) an Lithium. Im Falle der Herstellung eines Lithiumeisenphosphats ist dagegen ein höherer Überschuss an Lithium vorteilhaft; während der Stand der Technik ein Li:Fe-Verhältnis von 3:1 vorschlägt, haben die Erfinder festgestellt, dass ein Verhältnis von zwischen 5:1 und 15:1 und insbesondere 9:1 bis 11:1 günstig ist. Günstig ist weiterhin die - bekannte - Zugaben eines Antioxidationsmittels wie Ascorbinsäure, um eine Oxidation der Fe(II)-Ionen zu verhindern.

Die Ausgangsmaterialien werden in Lösung oder, wenn sie erst bei höherer Temperatur und/oder erhöhtem Druck in Lösung gebracht werden können oder sollen, in Suspension gebracht und zusammen mit dem Basismaterial in einem Autoklaven bei erhöhter Temperatur behandelt, in der Regel mehrere Stunden lang (z.B. 2-10 h) bei über 100°C (z.B. bei 100 bis 300°C). Die konkreten Druck- und Temperaturparameter wählt der Fachmann je nach Bedarf. Nach Abkühlen und Entspannen wird die entstandene Suspension abfiltriert, und der Rückstand wird getrocknet und/oder getempert, im Fall der LiFePO₄-Beschichtung z.B. häufig 1 h lang bei 110°C unter Luft und im Fall der Li₄Ti₅O₁₂-Beschichtung z.B. 10 min bei 240°C unter Luft. In manchen Fällen empfiehlt sich eine anschließende Sinterung, z.B. im Falle der L₁₄T₁₅O₁₂-Beschichtung, die relativ kurz, z.B. 10 min. lang, bei einer Temperatur zwischen ca. 300°C und 700°C, vorzugsweise im Bereich von ca. 500°C, erfolgen kann.

In einer spezifischen Ausführungsform werden den mit Interkalationsmaterial beschichteten Partikeln für die Herstellung der Elektrode weiterhin Partikel beigemischt, die entweder aus einem Basismaterial (einem Aktivkohlenstoff) oder einem Faraday'schen Speichermaterial (einem Lithium-Interkalationsmaterial) oder, bevorzugt, aus einer Kombination von beiden bestehen. Die Partikel aus einem Faraday'schen Speichermaterial werden bevorzugt als Nanopartikel, d.h. in einer Größenordnung von durchschnittlich unter 1 µm, eingesetzt. Das Mischungsverhältnis der Komponenten kann dabei ggf. beliebig eingestellt werden. Günstig ist ein Verhältnis von 75 bis 98 Masse-% Basismaterial zu 2 bis 25 Masse-% Faraday'schem Speichermaterial; stärker bevorzugt sind 85 bis 95 Masse-% zu 5 bis 15 Masse-%.

Die Mischungen können durch Vermischen der beiden Komponenten in einer Kugelmühle bei Raumtemperatur hergestellt werden, was den Vorteil hat, dass das eingesetzte Basismaterial seine ursprüngliche Porosität in vollem Umfang beibehält. Das Basismaterial fördert die Aufrechterhaltung der Leistungsdichte, während der Zusatz des Faraday'schen Speichermaterials die Energiedichte steigern kann. Als Faraday'sches Speichermaterial können dabei dieselben Batteriematerialien eingesetzt werden, wie sie oben im Zusammenhang mit der Solvothermalsynthese aufgelistet sind.

Zur Herstellung von Elektrodenbeschichtungen werden die erfindungsgemäßen Partikel, fakultativ in Mischung mit unbeschichteten Nanopartikeln aus Faraday'schem Material und/oder Kohlenstoffpartikeln, soweit erforderlich, mit einem Bindemittel und/oder einem Material zur Verbesserung der Leitfähigkeit, beispielsweise einem Leitruß, in üblicher Weise kombiniert. Bevorzugt werden hierfür 75 bis 95 Gew.-% Hybridmaterial oder der Summe aus dem partikelförmigen Hybridmaterial, den Kohlenstoffpartikeln und/oder den Nanopartikeln, 4 bis 12 Gew.-% Leitruß und 5 bis 15 Gew.-% Bindemittel eingesetzt. Wird beispielsweise ein Polyvinylidenhalogenid-Homopolymer oder -Copolymer als Bindemittel verwendet, wird dieses vorzugsweise in einem geeigneten Lösemittel wie N-Methylpyrrolidon gelöst und anschließend zu den ggf. mit Leitruß vermischten Aktivmaterial-Partikeln gegeben. Die Mischung wird sodann auf ein als Stromableiter geeignetes Material aufgetragen und getrocknet. Zum Zwecke des Erhalts einer hohen Leistungs- und Energiedichte wird der Anteil an Bindemittel und Leitruß o.ä. so gering wie möglich gehalten.

In allen vorbeschriebenen Fällen konnte beobachtet werden, dass die Energiedichte auch vom verwendeten Elektrolyten abhängt. Kommerziell wird in der Regel Tetraethylammoniumtetrafluoroborat (1 M in Acetonitril ACN) als Elektrolyt für Doppelschichtkondensatoren eingesetzt. Wird stattdessen ein Mischelektrolyt aus diesem Material mit einem für Lithiumbatterien und -Kondensatoren üblichen Elektrolyten, insbesondere einem Lithiumsalz wie Lithiumhexafluorophosphat in einem der dafür üblichen Lösungsmittel bzw. Lösungsmittelgemische (z.B. Ethylencarbonat EC, Dimethylcarbonat DC, eine Mischung aus beiden, ggf. unter Zusatz von Ethylacetat EA) verwendet, so lässt sich die Energiedichte im Potentialbereich von 0 bis 2,7 V bei gleicher Leistungsdichte deutlich steigern. Am Beispiel Li₄Ti₅O₁₂ konnte eine Steigerung ca. 10 Wh/kg beobachtet werden.

Ein weiterer Vorteil der erfindungsgemäßen Hybridkondensatoren liegt in der im Vergleich zu reinen Faraday'schen Speichern reduzierten Alterung der Batteriematerialien, der auf der elektrostatischen Energiespeicherung beruht.

Die vorliegende Erfindung ist insbesondere für die Herstellung und den Betrieb von Doppelschichtkondensatoren, Hybridkondensatoren, Lithiumionenbatterien, Brennstoffzellen und Kombinationen von Batterien und Brennstoffzellen wie z.B. Metall-Luft-Batterien geeignet. Die erfindungsgemäßen Teilchen können darüber hinaus z.B. für katalytische Zwecke (Katalysatoren) oder auf dem Gebiet Life Science (zur Herstellung funktionalisierter Wirkstoffe) eingesetzt werden.

Die Erfindung soll nachstehend anhand von Beispielen näher erläutert werden.

### Herstellungsbeispiel 1 mit Vergleichsbeispiel: Solvothermalsynthese von LiFePO₄

Die Solvothermalsynthese von LiFePO₄ ist in der Literatur beschrieben (J. Chen et al., Solid State lonics 178 (2008) 1676-1693). Die Erfinder haben jedoch festgestellt, dass es günstig ist, mit einem Überschuss an LiOH und - in Abweichung von den Literaturangaben - mit einem Komplexierungsmittel, beispielsweise 2-(2-Methoxyethoxy)essigsäure (MEAH) zu arbeiten, da sich auf diese Weise phasenreines LiFePO₄ gewinnen lässt.

Angelehnt an die Synthese von Chen et al. wurde zunächst die Verfahrensvariante A (ohne Komplexbildner) getestet. Die Komponenten wurden gelöst und 5h bei 200°C im 500 ml-Autoklaven behandelt. Für die Röntgendiffraktogramme wurde das Pulver 1h bei 110°C getrocknet. Es zeigte sich, dass mit diesem Verfahren kein phasenreines LiFePO₄ erhalten wurde. Erst durch die Verwendung von 2-(2-Methoxyethoxy)-essigsäure (MEAH) mit einem größeren Überschuss an LiOH (Verfahrensvariante B) wurde phasenreines LiFeO₄ erhalten.

| **Synthese LiFePO₄** | **A** | **B** |
|---|---|---|
| 1 molare H₃PO₄ | 8,3 g | 18,8 g |
| Fe(II)SO₄ Heptahydrat | 2,2 g | 4,9 g |
| LiOH | 1,0 g | 3,0 g |
| Wasser | 101,7 g | 221,7 g |
| Ascorbinsäure | 0,1 g | 0,3 g |
| 2-(2-Methoxyethoxy)-essigsäure (MEAH) | - | 7,2 g |

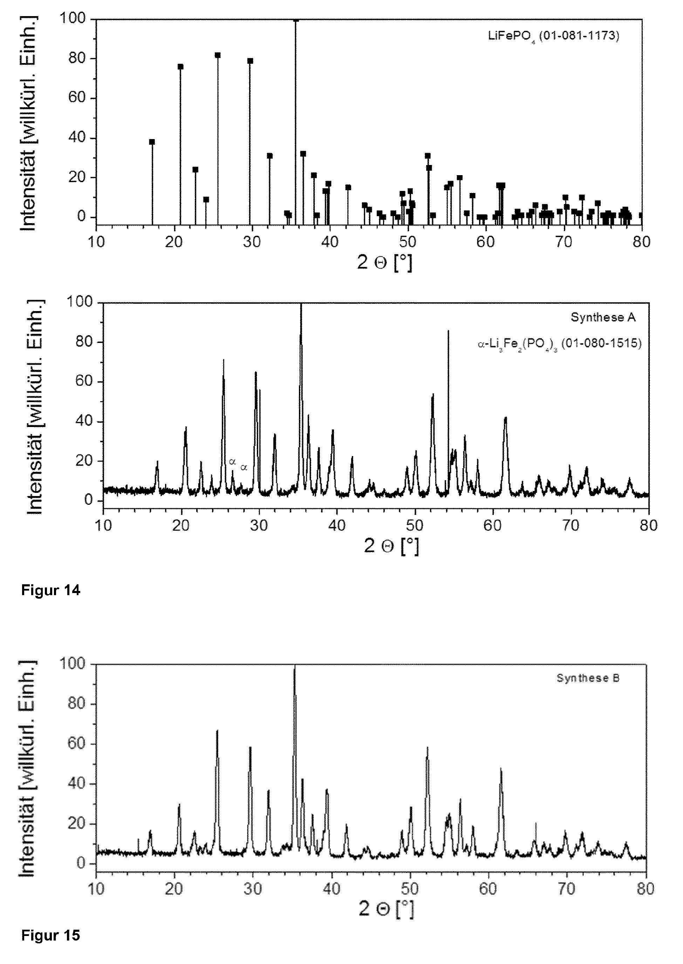

Die Röntgendiffraktogramme beider Synthese-Produkte sowie das Referenz-Reflexmuster für LiFePO₄ nach dem JCPDS-Datenblatt 01-081-1173 sind in den Figuren 14 und 15 gezeigt. Als Verunreinigung des Syntheseprodukts A liegt a-Li₃Fe₂(PO₄)₃ (JCPDS-Nr.: 01-080-1515) vor (die beiden mit α beschrifteten Reflexe).

In einem weiteren Ansatz (Variante C) wurden in einem 500 ml-Autoklaven mit Tefloneinsatz 132,8 g destilliertes Wasser, 0,2 g Ascorbinsäure (zur Unterdrückung der Bildung von Fe(III), 4,8 g (MEAH) und 12,5 g einer 1-molaren Phosphorsäure vorgelegt. Anschließend wurden 3,3 g FeSO₄ · 7 H₂O darin gelöst (Dauer: 20 - 30 min). Zu dieser Mischung wurde eine Lösung aus 3,0 g LiOH in 25,0 g destilliertem Wasser zugesetzt und mit 2 ml destilliertem Wasser gespült. Auch diese Lösung wurde im Autoklaven 5 h bei 200°C behandelt. Nach dieser Behandlung wurde das Reaktionsprodukt abfiltriert und mit ca. 250 ml destilliertem Wasser von pH 6 auf neutral gewaschen. Zum Schluss wurde das Pulver bei 110°C unter Luft getrocknet. Es zeigte sich, dass bei Verwendung eines deutlichen Überschusses an LiOH phasenreines LiFePO₄ entstand.

### Herstellungsbeispiel 2: Solvothermalsynthese von Li₄Ti₅O₁₂

Den Erfindern ist erstmals die Solvothermalsynthese von phasenreinem Li₄Ti₅O₁₂ gelungen, und zwar unter Zusatz von 2-Methyl-2,4-pentandiol. Diese Substanz komplexiert Titanionen und verhindert damit die Bildung von schlecht löslichem TiO₂ als Zwischenprodukt.

In einem 500 ml-Autoklaven mit Tefloneinsatz wurden 112,5 g Ethanol, 8,9 g 2-Methyl-2,4-pentandiol vorgelegt. Anschließend wurden 13,1 g Titan(IV)-ethylat (97,9%) und 65,7 g Hydrolyselösung (konz. Salzsäure in Ethanol und Wasser) in 60 min zugetropft und 10 min gerührt. Danach wurden 2,5 g LiOH zugegeben und mindestens 1 h gerührt.

Diese Lösung wurde im Autoklaven 5 h bei 160 - 200°C behandelt. Nach dieser Behandlung wurde das Reaktionsprodukt abfiltriert und mit Ethanol gewaschen. Das Pulver wurde bei 110°C unter Luft getrocknet. Erhitzen des Pulvers auf über 450°C führte zu phasenreinem Li₄Ti₅O₁₂ (LTO).

### Vergleichsbeispiele 2a) bis 2d) zu Herstellungsbeispiel 2

Die Vorgehensweisen unterschieden sich von der des Herstellungsbeispiels dadurch, dass für die Solvothermalsynthese neben dem Basismaterial (unverändert) folgenden Ausgangskomponenten eingesetzt wurden:

| **Einwaagen/Synthesevariante** | **a)** | **b)** | **c)** | **d)** |
|---|---|---|---|---|
| Titan(IV)-ethylat (97,9%) | 11,4 g | 11,4 g | 11,4 g | 11,4 g |
| LiOH | - | 1,7 g | 1,7 g | 1,7 g |
| Lithiumacetylacetonat | 4,2 g | - | - | - |
| Ethanol | 80,0 g | 80,0 g | 80,0 g | 80,0 g |

| **Additiv** | | | | |
|---|---|---|---|---|
| 2-Methyl-2,4-pentandiol | - | - | - | - |
| Triethanolamin | - | - | 7,5 g | - |
| PEG 550 | - | - | - | 27,5 |
| Hydrolyselösung | 58,5 g | 58,5 g | 58,5 g | 58,5 g |

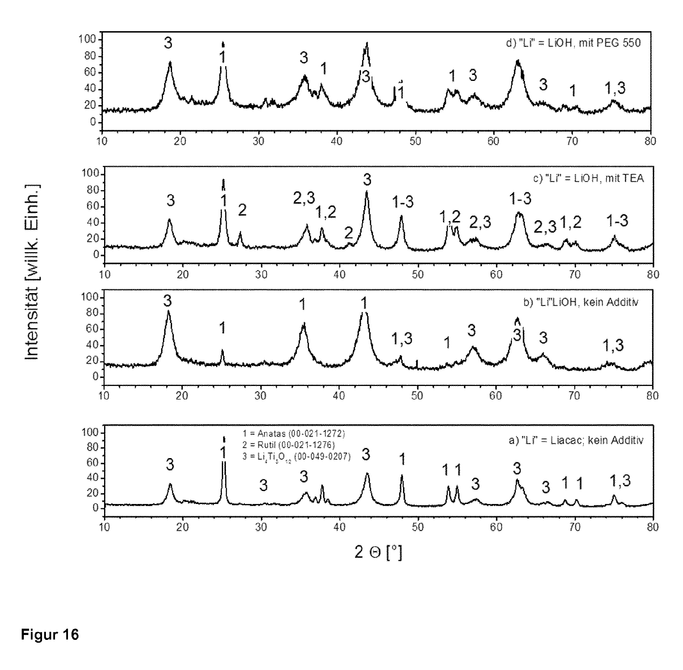

Bei der nachfolgenden thermischen Behandlung wie im Herstellungsbeispiel 2 (bis 450°C an Luft) wandelten sich die amorphen Beschichtungen in teilkristalline Materialien mit Nebenphasen aus Rutil und Anatas um, wie aus Figur 16 ersichtlich.

### Herstellungsbeispiel 3: Solvothermalsynthese von dünn mit LiFePO₄ beschichteten Aktivkohlenstoff-Partikeln

Die Vorgehensweise entspricht dem von Beispiel 1, das Mengenverhältnis von P:Fe:Li wurde jedoch nochmals leicht modifiziert. Als Basismaterial wurde Kuraray YP-17D der Fa. Kuraray (Partikeldurchmesser: ca. 3-20 µm) oder VL22.2-1 Z der Fa. SGL Group (Partikeldurchmesser: ca. 5-10 µm) verwendet. Aus den nachstehenden Edukten wurden verschieden dick beschichtete Teilchen A, B bzw. C hergestellt, deren Masseverhältnis von Kohlenstoff zu LiFePO₄ bei 50/50, 70/30 und 90/10 lag. Die Menge der Ausgangsmaterialien ist aus Tabelle 1 ersichtlich:

**Tabelle 1**

| **Massenverhältnisse C** / **LiFePO₄** | **A** | **B** | **C** |
|---|---|---|---|
| | **50/50** | **70/30** | **90/10** |
| 1 molare H₃PO₄ | 19,2 g | 11,5 g | 3,8 g |
| Fe(II)SO₄ Heptahydrat | 4,9 g | 3,0 g | 1,0 g |
| LiOH | 4,5 g | 2,7 g | 0,9 g |
| Wasser | 225 g | 180 g | 60 g |
| Ascorbinsäure | 0,3 g | 0,2 g | 0,06 g |
| 2-(2-Methoxyethoxy)-essigsäure (MEAH) | 7,2 g | 4,3 g | 1,4 g |
| Aktivkohlenstoff | 2,8 g | 3,9 g | 4,5 g |

Das entstandene Pulver wurde nach dem Gewinnen jeweils bei 110°C unter Luft getrocknet und anschließend für jeweils 10 min bei 240°C unter Luft und bei 500°C unter N₂ behandelt.

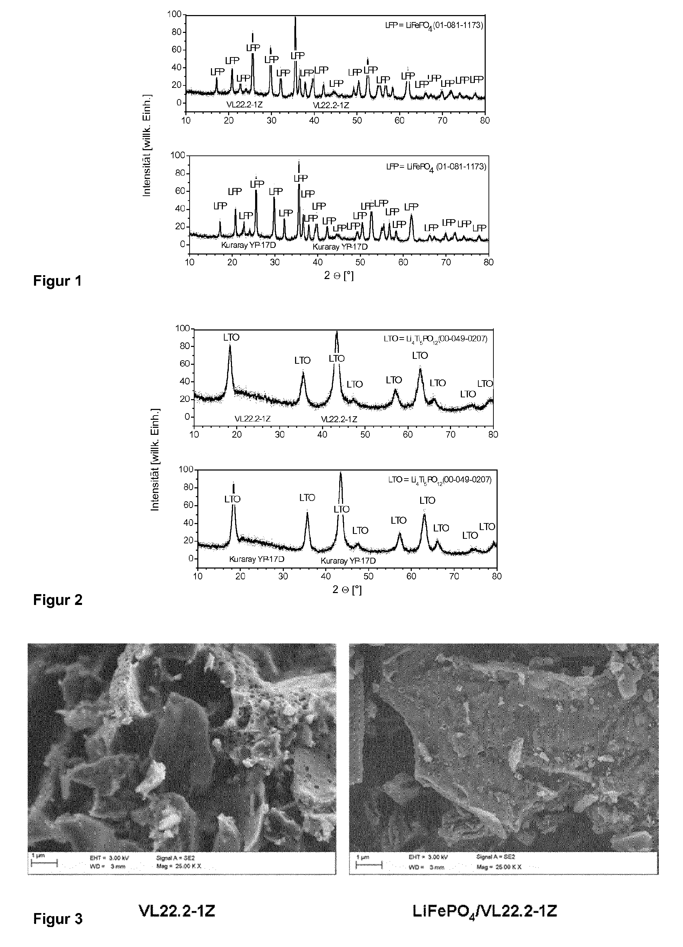

In Fig. 3 sind exemplarisch die rasterelektronenmikroskopischen Aufnahmen eines unbeschichteten und eines über Solvothermalsynthese mit LiFePO₄ beschichteten Basismaterials (VL22.2-1Z, SGL Group) zu sehen. Die Morphologie des Basismaterials ist, wie beabsichtigt, unverändert, desgleichen im Wesentlichen der Partikeldurchmesser. Auch die Poren des Basismaterials sind nach der Beschichtung noch deutlich zu erkennen. Rechnerisch ergibt das für einen Massenanteil von 50 zu 50 und unter der Annahme, dass die BET-Oberfläche des Basismaterials (VL22.2-1Z: knapp 1800 g/m²) homogen und gleichmäßig mit LiFePO₄ beschichtet ist, eine Dicke von ca. 2 nm, in der das LiFePO₄ überwiegend auf den inneren Poren verteilt ist. Daher wird eine deutlich erkennbare LiFePO₄-Schicht nicht erwartet. Die entsprechende stark vereinfachte Modellrechnung ergibt für die Li₄Ti₅O₁₂-Beschichtung (siehe das nachfolgende Beispiel 4) (mit Massenverhältnis von 40 zu 60) eine Schichtdicke von ca. 0,5 nm.

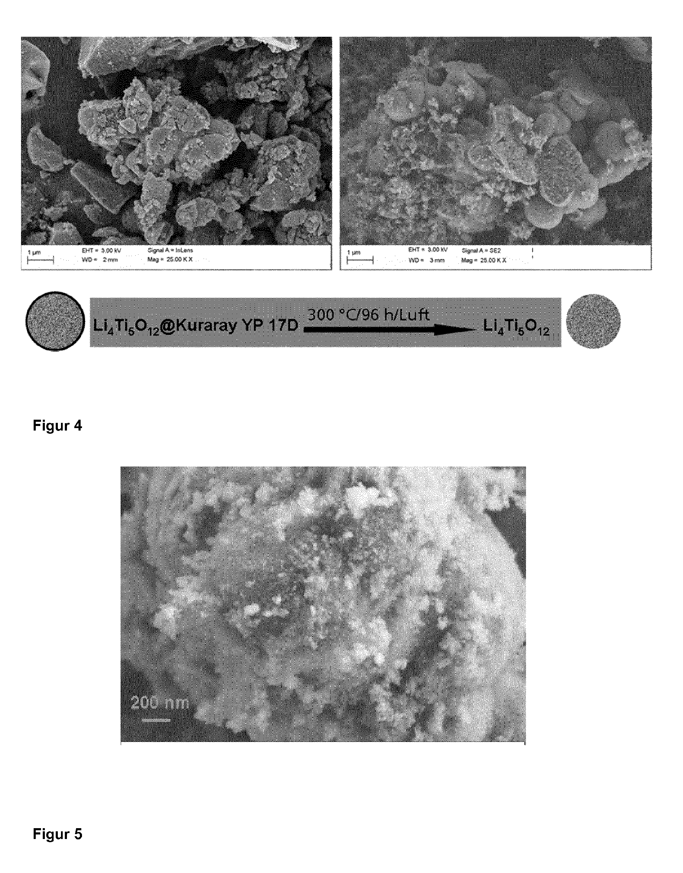

Fig. 1 zeigt die Röntgenbeugungsanalyse von gemäß Beispiel 3A erhaltenen LiFePO₄/Basismaterial-Partikeln (Basismaterial: VL22.2-1 Z (oben) und Kuraray YP-17D (unten). Die Reflexe für LiFePO₄ (LFP) sind deutlich erkennbar. Das Basismaterial wird durch den Verlauf des Untergrunds bei 2Θ 22 - 24° und 44° angedeutet. Die Stöchiometrie des beschichteten Basismaterials wurde mit Hilfe der optischen Emissionsspektrometrie mit induktiv gekoppeltem Plasma (ICP-OES) kontrolliert und bestätigt. Das Massenverhältnis zwischen dem Faraday-Speichermaterial LiFePO₄ und dem Basismaterial (VL22.2-1Z bzw. Kuraray YP-17D) wurde außerdem durch thermische Analyse, durch Oxidation des Basismaterials unter Luft bis 1000°C (d.h. durch langsames Ausbrennen des Kohlenstoffs) ermittelt. Die Aktivkohle verbrennt je nach Porosität und Oberfläche bis ca. 500°C unter Luft zu Kohlendioxid, und zurück bleibt der Anteil des anorganischen Faraday'schen Speichermaterials, also das Gerüst der anorganischen Beschichtung. In Fig. 4 sind REM-Aufnahmen eines mit ca. 40 Gew.-% Lithiumtitanat beschichteten Teilchens vor und nach einer 95 stündigen, vorsichtigen thermischen Behandlung (300°C) an Luft zu sehen. In Fig. 5 ist das verbleibende Gerüst der anorganischen Beschichtung nach der thermischen Behandlung weiter vergrößert dargestellt.

Der verbleibende anorganische Rückstand entspricht dem Massenanteil des Batteriematerials, der Verlust an Masse entspricht der Masse des Basismaterials. Für LiFePO₄/Basismaterial konnte für die Variante A ein Verhältnis von 50 zu 50 (0,5 g LiFePO₄/1 g beschichtetes Material) ermittelt werden.

### Vergleichsbeispiel zum Herstellungsbeispiel 3

Die Vorgehensweise unterschied sich von der des Herstellungsbeispiels 3 dadurch, dass für die Solvothermal-Synthese die Ausgangsmaterialien gemäß Variante A des Herstellungsbeispiels 1 eingesetzt wurden. Die Behandlung erfolgte im Übrigen wie für Herstellungsbeispiel 1 angegeben.

Die Röntgenbeugungsanalyse zeigt neben den Reflexen, die dem Lithiumeisenphosphat zugeordnet werden können, weitere Reflexe, die belegen, dass kein phasenreines Produkt auf den Kohlenstoffpartikeln entstanden war.

### Herstellungsbeispiel 4: Solvothermalsynthese von dünn mit Li₄Ti₅O₁₂ beschichtetem Aktivkohlenstoff

Die Vorgehensweise entspricht der von Beispiel 2. Als Basismaterial wurde Kuraray YP-17D der Fa. Kuraray oder VL22.2-1Z der Fa. SGL Group verwendet. Aus den nachstehenden Edukten wurden verschieden dick beschichtete Teilchen A, B bzw. C hergestellt, deren Masseverhältnis von Kohlenstoff zu Li₄Ti₅O₁₂ bei 50/50, 70/30 und 90/10 lag, siehe Tabelle 2:

**Tabelle 2**

| **Massenverhältnisse C** / **LTO** | **A** | **B** | **C** |
|---|---|---|---|
| | **50/50** | **70/30** | **90/10** |
| Titan(IV)-ethylat (97,9%) | 6,5 g | 3,3 g | 0,9 g |
| LiOH | 1,3 g | 0,6 g | 0,3 g |
| Ethanol | 66,2 g | 133,2 g | 46,0 g |
| 2-Methyl-2,4-pentandiol | 4,4 g | 2,2 g | 0,5 g |
| Hydrolyselösung | 32,9 g | 16,4 g | 4,7 g |
| Aktivkohlenstoff | 3,4 g | 4,0 g | 3,3 g |

Das entstandene Pulver wurde nach dem Gewinnen jeweils bei 110°C unter Luft getrocknet und anschließend für jeweils 10 min bei 240°C unter Luft und bei 500°C unter N₂ behandelt.

Fig. 2 zeigt die Röntgenbeugungsanalyse von gemäß Beispiel 4A erhaltenen Li₄Ti₅O₁₂/Basismaterial-Partikeln (Basismaterial: VL22.2-1Z (oben) und Kuraray YP-17D (unten). Die Reflexe für Li₄Ti₅O₁₂ (LTO) sind deutlich erkennbar. Das Basismaterial wird durch den Verlauf des Untergrunds bei 2Θ 22 - 24° und 44° angedeutet. Die Stöchiometrie des beschichteten Basismaterials wurde wie für Beispiel 3 beschrieben kontrolliert und bestätigt. Das Massenverhältnis zwischen dem Faraday-Speichermaterial Li₄Ti₅O₁₂ und dem Basismaterial (VL22.2-1Z bzw. Kuraray YP-17D) wurde durch thermische Analyse, durch Oxidation des Basismaterials unter Luft bis 1000 °C ermittelt. Der verbleibende anorganische Rückstand entspricht dem Massenanteil des Batteriematerials, der Verlust an Masse entspricht der Masse des Basismaterials. Für Li₄Ti₅O₁₂/Basismaterial konnte für die Variante A ein Verhältnis von 40 zu 60 (0,4 g Li₄Ti₅O₁₂/1 g beschichtetes Material) ermittelt werden.

Die nachstehende Tabelle 3 listet die durch N₂-Adsorption gemessene Oberfläche nach BET (DIN ISO 9277) und den mittleren Porendurchmesser nach BJH (DIN 66134) der nach den Beispielen 3 und 4 hergestellten Teilchen auf.

**Tabelle 3**

| Teilchen-Zusammensetzung Angabe in Klammern: Massenverhältnis Faraday'sches Material zu Aktivkohlenstoff | Oberfläche nach BET (m²g⁻¹) | Mittlerer Porendurchmesser (für die Desorption nach BJH) (nm) |
|---|---|---|
| VL22.2-1Z (SGL4) | 1783 | 4,0 |
| Li₄Ti₅O₁₂/ VL22.2-1Z (30:70) | 1312 | 4,0 |
| Li₄Ti₅O₁₂/ VL22.2-1Z (50:50) | 1098 | 4,0 |
| LiFePO₄/ VL22.2-1Z (10:90) | 1614 | 4,0 |
| LiFePO₄/ VL22.2-1Z (30:70) | 1135 | 3,9 |
| LiFePO₄/ VL22.2-1Z (50:50) | 833 | 4,0 |
| Kuraray YP-17D | 1401 | 1,1 |
| Li₄Ti₅O₁₂/ Kuraray YP-17D (50:50) | 1019 | 1,1 |
| LiFePO₄/ Kuraray YP-17D (10:90) | 1228 | 1,1 |
| LiFePO₄/ Kuraray YP-17D (30:70) | 822 | 1,1 |
| LiFePO₄/ Kuraray YP-17D (50:50) | 691 | 1,1 |

Man erkennt, dass die nach BET gemessene Oberfläche der Kohlenstoff-Teilchen durch die Beschichtung und Beladung mit dem Interkalationsmaterial mit zunehmendem Anteil an Interkalationsmaterial abnimmt, so dass es wünschenswert ist, die Beschichtung möglichst gering und dünn zu halten. Außerdem ist ersichtlich, dass die Poren frei bleiben und nicht verstopfen.

### Herstellungsbeispiel 5: Herstellung eines Aktivmaterial-Gemischs aus Faraday-Speichermaterial-Nanopartikeln und Basismaterial

Pulver der Zusammensetzung LiFePO₄ (positive Elektrode) bzw. Li₄Ti₅O₁₂ (negative Elektrode) wurden mit dem Basismaterial Kuraray YP-17D in einer Kugelmühle im Massenverhältnis 10 Massenprozent LiFePO₄ bzw. Li₄Ti₅O₁₂ und 90 Massenprozent Basismaterial bei 20°C mit 2 x 15 min bei 100 Umdrehungen pro Minute vermischt.

### Herstellungsbeispiel 6: Herstellung von Elektroden mit Elektrodenmaterialien aus den Beispielen 3 bis 5

In allen Varianten wurde ein Verhältnis des Aktivmaterials aus den erfindungsgemäßen Partikeln zu Leitruß zu Polymer von 83 / 7 / 10 gewählt. Die folgenden Kombinationen wurden getestet:

| | | | |
|---|---|---|---|
| Leitruß: | | TIMCAL Super P Li | |
| | | | |
| Binder: | | Kynar Powerflex PVDF | |
| | | | |
| Aktivmaterialien: | | | |
| Positive Elektrode: | | Negative Elektrode: | |
| VL22.2-1Z | | VL22.2-1Z Kuraray YP-17D | |
| Kuraray YP-17D | | | |
| Mit LiFePO₄ beschichtete Partikel (Herstellungsbeispiel 3): | | Mit Li₄Ti₅O₁₂ beschichtete Partikel (Herstellungsbeispiel 4): | |
| | (a) Beschichtung auf VL22.2-1Z, | | (a) Beschichtung auf VL22.2-1 Z |
| | (b) Beschichtung auf YP 17D | | (b) Beschichtung auf YP 17D |
| Pulvermischung aus 10 Masse-% | | Pulvermischung aus 10 Masse-% | |
| | LiFePO₄-Partikeln und 90 Masse-% | | Li₄Ti₅O₁₂-Partikeln und 90 Masse-% |
| | YP-17D (Herstellungsbeispiel 5) | | YP-17D (Herstellungsbeispiel 5) |

Allgemeine Arbeitsanleitung: Kynar Powerflex PVDF wurde in N-Methylpyrrolidon (= NMP) gelöst (= 1 h rühren bei RT). Die Menge an NMP richtete sich nach dem verwendeten beschichteten Kohlenstoff-Aktivmaterial. Der Leitruß und das Aktivmaterial wurden in der Kugelmühle gemischt (= 2 x 15 min 100 Umdrehungen pro Minute), anschließend wurde die PVDF/NMP-Lösung dazugegeben und in der Kugelmühle gemischt (= 4 x 15 min bei 300 Umdrehungen pro Minute).

Ca. 30 Minuten vor dem Ende der Mischzeit wurde eine Al-Folie (als Stromableiter) mit 1 n NaOH-Lösung angeätzt: Die Al-Folie wurde mit der rauen Seite nach oben in ein Gefäß gelegt, bis Bläschen aufstiegen (Dauer: etwa 40 sec), und anschließend mit reichlich destilliertem Wasser und danach mit Ethanol gespült und mit einem fusselfreien Reinraumtuch getrocknet. Die raue Seite wurde mittels Labcoater und Rakel mit einer Nassfilmdicke von 100 oder 150 µm beschichtet. Die Schichten wurden im Vakuum bei 50°C für 3 h und bei 80°C für 2 bis 4 h getrocknet. Aus der beschichteten Folie wurden Elektroden gestanzt, die mit 5 t für 20 sec gepresst und vor dem Einschleusen in das Batterie-Stack 5 h bei 80°C im Vakuum getrocknet wurden.

### Beispiele und Vergleichsbeispiele

### I. Eingesetzte Elektrolytmischungen:

1.) Klassische Batterie-Elektrolyte:
   - LP 30 (Merck): 1 M Lithiumhexafluorophosphat in Ethylencarbonat/ Dimethylcarbonat (EC/DMC/LiPF₆)
   - LP 81 (Merck): 1 M Lithiumhexafluorphosphat in Ethylencarbonat/Dimethylcarbonat/Ethylacetat (EC/DMC/EA/LiPF₆)
2.) Klassischer DSK-Elektrolyt:
   - CB 10 (Merck): 1 M Tetraethylammoniumtetrafluorborat (TEABF₄) in Acetonitril
3.) Mischelektrolyte aus Batterie- und DSK-Elektrolyt für Hybridelektroden:
   - 0,8 mol TEABF₄ und 0,2 mol LiPF₆ in Acetonitril
   - 10 Gew.-% LP81 und 90 Gew.-% CB10

### II. Herstellung der Test-Zellen (Swagelok-Zellen)

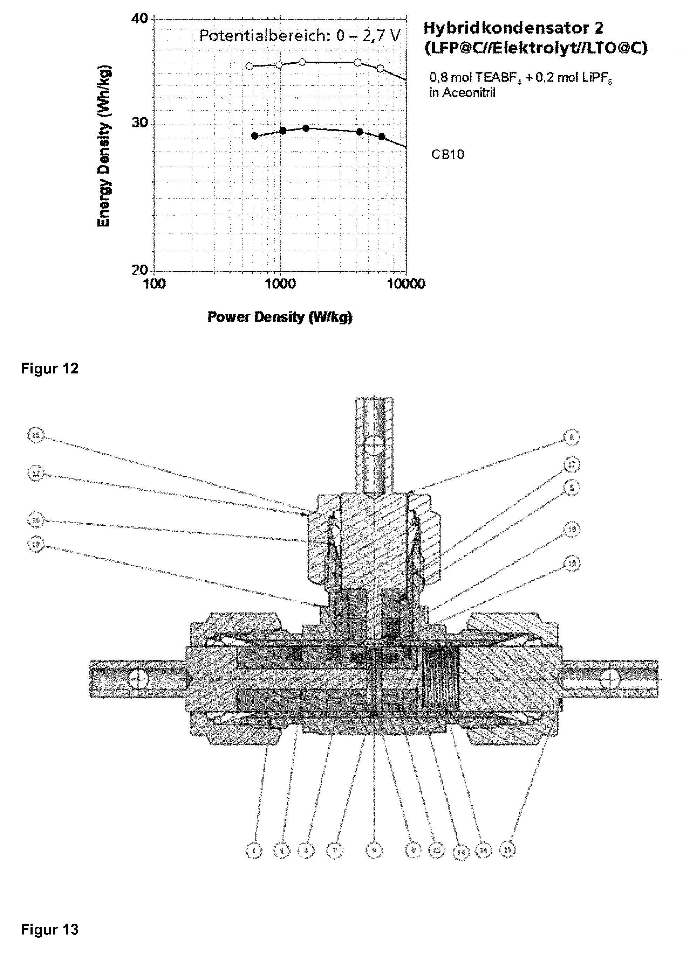

Um die Eigenschaften der erfindungsgemäßen Elektroden im Vergleich denjenigen zu untersuchen, die aus dem Stand der Technik bekannte Elektroden aufweisen, wurden jeweils eine negative und eine positive Elektrode mit einem zwischenliegenden Separator in eine Swagelok-Zelle eingebaut, wie sie in Figur 13 dargestellt ist.

### Vergleichsbeispiel VA

Eine Swagelok-Zelle wurde mit zwei Kohlenstoffelektroden für einen "klassischen" Doppelschichtkondensator bestückt, die gemäß Herstellungsbeispiel 6 mit Kohlenstoffpartikeln Kuraray YP-17D hergestellt worden waren. Als Elektrolytflüssigkeit diente CB 10 der Fa. Merck. In den Figuren wird diese Anordnung als "Doppelschichtkondensator" bezeichnet.

### Vergleichsbeispiele VB1-4

Dieselbe Swagelok-Zelle wurde mit einer (positiven) Kohlenstoffelektrode wie für Vergleichsbeispiel VA angegeben und mit einer negativen Elektrode bestückt, wobei die negative Elektrode gemäß Herstellungsbeispiel 5 in Kombination mit Herstellungsbeispiel 6 unter Verwendung von einer Mischung aus Lithiumtitanat-Partikeln und Kohlenstoffpartikeln erzeugt worden war. Als Elektrolyte wurden CB 10 von Merck (VB1, in den Figuren auch bezeichnet als "Hybridkondensator 1"), LP 81 von Merck (VB2), 0,9 mol CB 10 mit 0,1 mol LP 81 (VB3) bzw. 0,8 mol TEABF₄ mit 0,2 mol LiPF₆ in Acetonitril (VB4) eingesetzt.

### Vergleichsbeispiel VC

Die Swagelok-Zelle wurde mit einer negativen Elektrode wie in den Vergleichsbeispielen VB1-4 angegeben und mit einer positiven Elektrode bestückt, die gemäß Herstellungsbeispiel 5 in Kombination mit Herstellungsbeispiel 6 unter Verwendung einer Mischung aus Lithiumeisenphosphat-Partikeln und Kohlenstoffpartikeln erzeugt worden war. Als Elektrolyt diente CB 10.

### Beispiele A1-3

Die Swagelok Zelle wurde mit einer (positiven) Kohlenstoffelektrode wie für Vergleichsbeispiel VA angegeben und mit einer negativen Elektrode bestückt, wobei die negative Elektrode gemäß Herstellungsbeispiel 4 in Kombination mit Herstellungsbeispiel 6 erzeugt worden war. Das Gewichtsverhältnis von Kohlenstoff zu Lithiumtitanat lag bei 90:10 (Beispiel A1), 70:30 (Beispiel A2) und 50:50 (Beispiel A3). Als Elektrolyt diente CB 10.

### Beispiele B1-2

Die Swagelok Zelle wurde mit einer negativen Elektrode und einer positiven Elektrode bestückt, die jeweils nach Beispiel 4 bzw. Beispiel 3 in Kombination mit Herstellungsbeispiel 6 erzeugt worden waren. Als Elektrolytlösung wurde CB 10 eingesetzt. Für beide Elektroden wurden einmal Teilchen A verwendet, d.h. Teilchen, in denen das Mengenverhältnis des Beschichtungsmaterials (Faraday-Materials) zu Kohlenstoff bei 50:50 lag (Beispiel B1), und einmal Teilchen B, d.h. Teilchen, in denen das Mengenverhältnis des Beschichtungsmaterials (Faraday-Materials) zu Kohlenstoff bei 30:70 lag (Beispiel B2).

### Beispiele C1-2

Die Beispiele B1 und B2 wurden mit der Änderung wiederholt, dass als Elektrolyt 0,8 mol TEABF₄ + 0,2 mol LiPF₆ in Acetonitril eingesetzt wurde.

### Ergebnisse:

Mit Hilfe der obigen Swagelok-Zellen wurden im Potentialbereich 0 - 2,7 V Ragone-Diagramme erstellt, aus denen sich die Relation von Energiedichte zu Leistungsdichte ablesen lässt. Die Diagramme enthalten die englische Bezeichnungen "Energy Density" für Energiedichte und "Power Density" für Leistungsdichte.

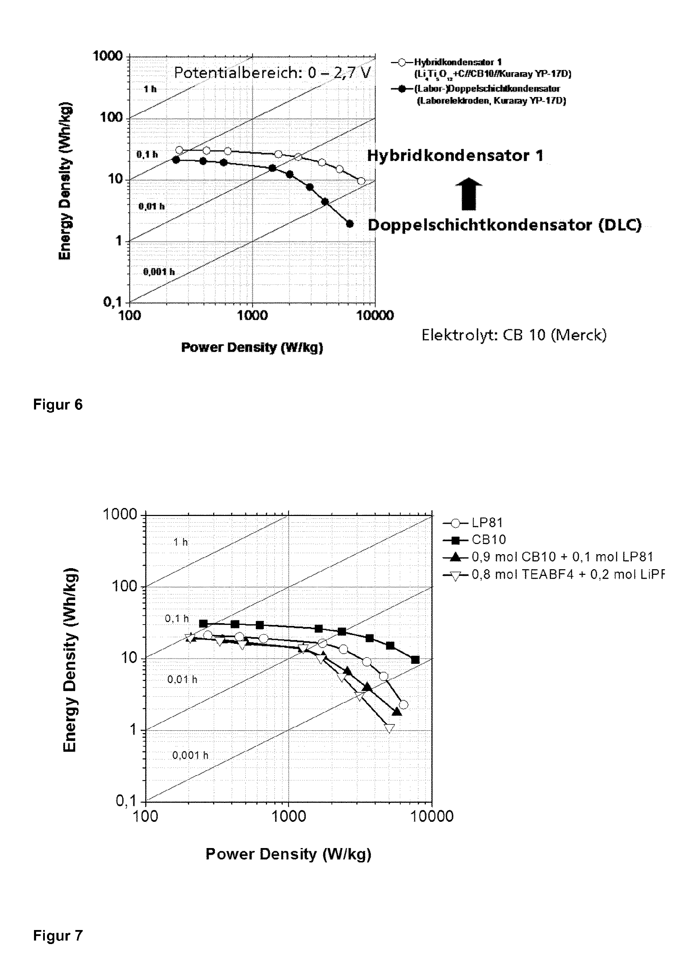

**Figur 6** zeigt ein Ragonediagramm, in dem die Leistungs- und Energiedichte eines "klassischen" Doppelschichtkondensators, hergestellt nach Vergleichsbeispiel VA, derjenigen eines Hybridkondensator gegenübergestellt ist, der nach Vergleichsbeispiel VB1 gefertigt wurde. Man erkennt eine Steigerung der Energiedichte des Hybridkondensators gegenüber der des Doppelschichtkondensators, wobei beim Hybridkondensator vor allem die üblicherweise beobachtete Abnahme der Energiedichte bei steigender Leistungsdichte wesentlich weniger stark abnimmt als beim Doppelschichtkondensator.

In **Figur 7** ist der Vergleich der vier Varianten des Hybridkondensators gemäß Vergleichsbeispiel VB gezeigt. Man erkennt, dass für den Betrieb von Hybridkondensatoren dieses Typs "klassische" Elektrolyte für Doppelschichtkondensatoren, hier CB 10 von Merck, die besten Ergebnisse liefern, während "klassische" Elektrolyte für Faraday'sche Batterien einen deutlichen Abfall der Leistungsdichte bei hohen Energiedichten verursachen. Die untersuchten Mischelektrolyte (Vergleichsversuche VB3 und VB4) senken die Energiedichte über den gesamten Bereich der Leistungsdichte hinweg noch stärker.

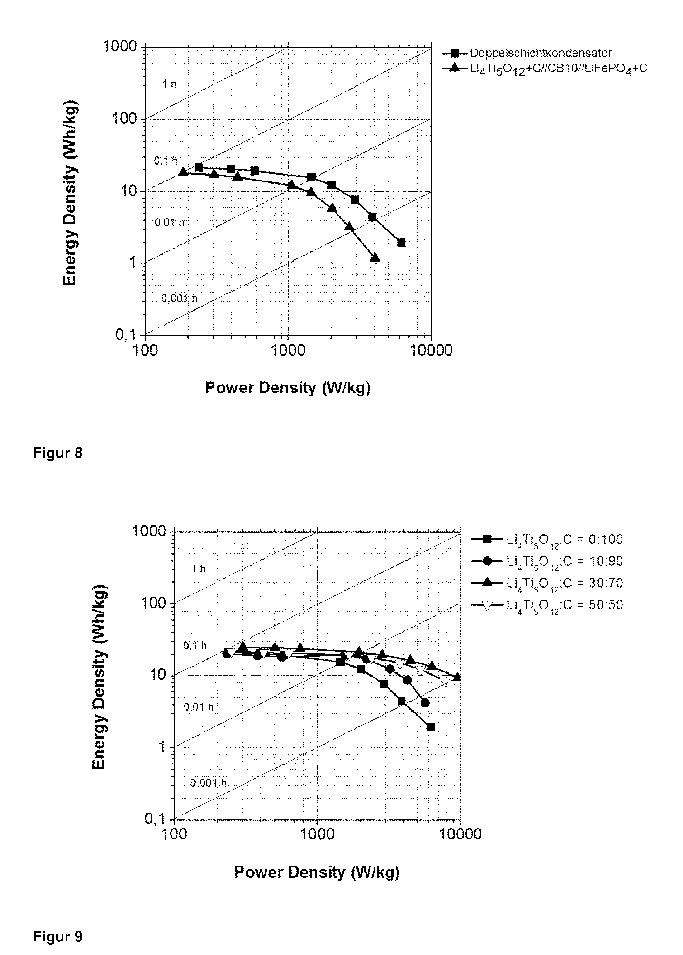

**Figur 8** zeigt ein Ragone-Diagramm, in dem die Relation von Energiedichte zu Leistungsdichte

für denselben Doppelschichtkondensator mit Kohlenstoffelektroden, wie er für das Ragone-Diagramm der Fig. 6 verwendet wurde, und für einen Hybridkondensator gemäß Vergleichsbeispiel VC (Gemisch aus Li₄Ti₅O₁₂-Partikeln und Kohlenstoffpartikeln für die negative Elektrode und Gemisch aus LiFePO₄-Partikeln und Kohlenstoffpartikeln) aufgezeichnet ist. Hier zeigt sich, dass die Energiedichte eines derartigen, beidseitig mit gemischten Materialien bestückten Hybridkondensators deutlich niedriger liegt als für den Doppelschichtkondensator.

**Figur 9** zeigt ein Ragone-Diagramm, in dem die Relation von Energiedichte zu Leistungsdichte für erfindungsgemäße Hybridkondensatoren aus Kohlenstoffelektroden und mit Li₄Ti₅O₁₂ beschichteten Kohlenstoffpartikeln gemäß den Beispielen A1-3 mit unterschiedlicher Beladung Batteriematerial/Kohlenstoff im Vergleich zu einem reinen Doppelschichtkondensator gemäß Vergleichsbeispiel VA (mit unbeschichteten Kohlenstoffpartikeln) gezeigt ist. Als Elektrolyt diente CB 10 von Merck. Man erkennt eine Steigerung der Energiedichte mit zunehmender Beladung der Kohlenstoffpartikel mit Lithiumtitanat. Die höchste Energiedichte wurde bei einem Mischungsverhältnis von 30:70 erreicht.

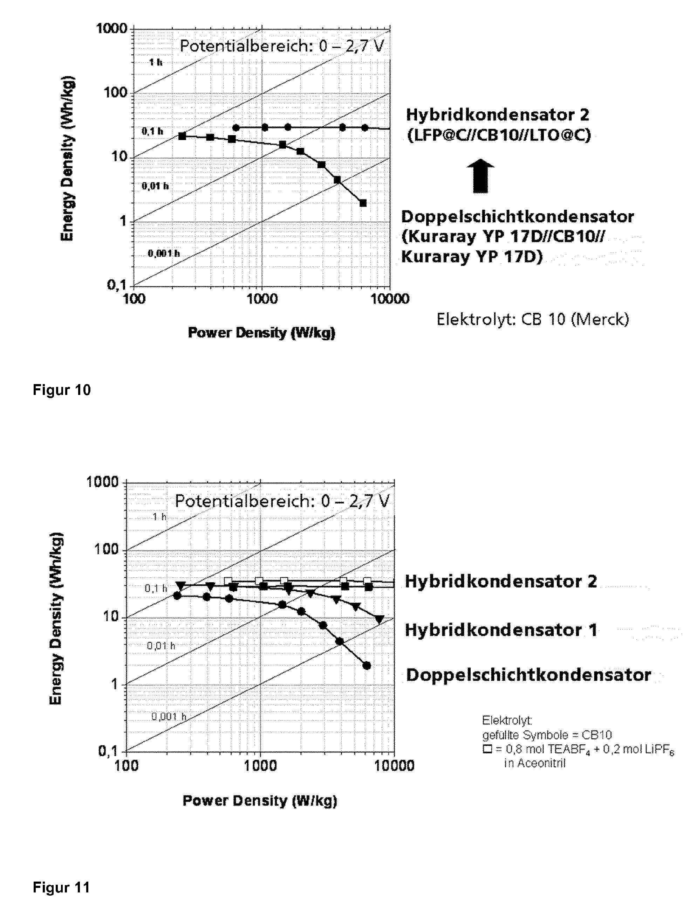

**Figur 10** zeigt ein Ragone-Diagramm, in dem die Relation von Energiedichte zu Leistungsdichte für einen erfindungsgemäßen Hybridkondensator nach Beispiel B1 in Relation zu dem "klassischen" Doppelschichtkondensator gemäß Vergleichsbeispiel VA aufgetragen ist. Als Elektrolyt wurde wiederum CB 10 von Merck eingesetzt. Hier zeigt sich, dass die Steigerung der Energiedichte dieses Kondensators im Bereich hoher Leistungsdichten im Vergleich zum "klassischen" Doppelschichtkondensator nochmals verbessert ist: Auch bei hohen Leistungsdichten nimmt sie so gut wie nicht mehr ab. Die Verbesserung gegenüber einem Hybridkondensator mit nur einseitiger Hybridelektrode ist beim Vergleich mit der Kurve für die Partikel gemäß Beispiel A3 in Figur 9 ersichtlich.

In **Figur 11** sind die Eigenschaften des Doppelschichtkondensators gemäß Vergleichsbeispiel VA, des Hybridkondensators mit Partikelmischungen gemäß Vergleichsbeispiel VC, des erfindungsgemäßen Kondensators gemäß Beispiel B1 mit CB 10 als Elektrolytflüssigkeit und des erfindungsgemäßen Kondensators gemäß Beispiel C1 mit 0,8 mol TEABF₄ + 0,2 mol LiPF₆ in Acetonitril miteinander verglichen. Die beiden Kurven der Beispiele B1 und B2 sind auch noch einmal in der **Figur 12** dargestellt, in der die Leistungsdichte im Bereich von 20 bis 40 Wh/kg herausvergrößert ist. Anhand dieser beiden Figuren lassen sich die bereits aus dem Vorstehenden erkennbaren Vorteile der vorliegenden Erfindung, darüber hinaus jedoch auch noch ein besonders überraschender Effekte bei der Verwendung spezifischer Elektrolytlösungen mit den erfindungsgemäßen Elektrodenmaterialien sehr gut erkennen: Die Energiedichte eines mit CB 10 betriebenen Hybridkondensators mit Elektroden, die aus Mischungen von Kohlenstoffpulvern mit Faraday'schen Nanopartikeln hergestellt wurden ("Hybridkondensator I" hergestellt gemäß Vergleichsbeispiel VC) liegt bei einer vergleichbaren Leistungsdichte deutlich höher als die des "klassischen" Doppelschichtkondensators (Vergleichsbeispiel VA). Gegenüber diesem Stand der Technik bietet die Erfindung jedoch eine signifikante Steigerung der Energiedichte bei vergleichbarer Leistungsdichte, und zwar durch die Verwendung von Elektroden, die mit Faraday'schem Speichermaterial beschichtete Partikel aus Basismaterial enthalten (siehe Beispiel B1). Die besten Eigenschaften jedoch zeigen Anordnungen, in denen die Elektroden aus mit Faraday'schem Speichermaterial beschichteten Partikeln nicht mit CB 10 kombiniert wurden, sondern mit 0,8 mol TEABF₄ + 0,2 mol LiPF₆ in Acetonitril (Beispiel C1). Mit dieser Ausführungsform kann die Energiedichte bei der jeweiligen Leistungsdichte nochmals um ca. 6-7 Wh/kg gesteigert werden, obwohl dieser Elektrolyt bei anderen Hybridelektroden, nämlich denjenigen mit Elektroden aus Partikelmischungen, ein Absinken der Leistungsdichte bewirkt (siehe Fig. 7).

Die Erfinder fertigten des Weiteren Swagelok-Zellen mit Elektroden gemäß den Beispielen B2 und C2 und konnten dabei feststellen, dass die Energiedichte dieser Zellen im Betrieb über den gesamten Bereich der Leistungsdichte hinweg nochmals höher lag als beim Betrieb von Zellen gemäß den Beispielen B1 und C1.

### Bezugszeichenliste zu Figur 13

- 1: Plastikeinsatz
- 3: Abdichtung des Elektrodenhalters der Arbeitselektrode
- 4: Elektrodenhalter der Arbeitselektrode
- 5: Abdichtung des Elektrodenhalters der Referenzelektrode
- 6: Elektrodenhalter der Referenzelektrode
- 7, 8, 9: Batteriezelle bestehend aus Arbeitselektrode (7), Gegenelektrode (8) und Separator (9)
- 10, 11: Abdichtringe für den Elektrodenhalter der Referenzelektrode
- 12: Schraubverschluss der Referenzelektrode
- 13: Abdichtung des Elektrodenhalters der Gegenelektrode
- 14: Elektrodenhalter der Gegenelektrode
- 15: Kontaktierungsstück zur Gegenelektrode
- 16: Feder zum Zusammenpressen der Batteriezelle
- 17: Plastikeinsatz der Referenzelektrode
- 18, 19: Referenzelektrode sowie Separator

## Patentansprüche

1. Verfahren zum Herstellen eines partikelförmigen Hybridmaterials zum Einsatz in der negativen Elektrode von Lithiumbatterien und -akkumulatoren, umfassend Teilchen mit einem Grundgerüst aus Kohlenstoff, die mit einer phasenreinen Beschichtung aus Li_{4-y}A_{y}Ti₅₋ₓMₓO₁₂, versehen sind, worin das Ion A ausgewählt ist unter ½ Mg, ½ Ca, 1/3 Al oder Mischungen davon, das Übergangsmetallion M ausgewählt ist unter 4/a Ge, Co, Fe, Co, Ni, Mn, Cr, Zr, Mo, V, Ta oder Mischungen davon, wobei a die Oxidationszahl des Übergangsmetallions bedeutet, x 0 oder eine beliebige Zahl von >0 bis 4 ist und y 0 oder eine beliebige Zahl von >0 bis 3 bedeutet, umfassend die Schritte:
a. Vermischen der folgenden Komponenten:
- einer wasser- oder alkohollöslichen Titanverbindung,
- für den Fall, dass x ≠ 0 ist, einer oder mehrerer Acetatverbindungen des oder der Ionen M,
- eines organischen Diols,
- LiOH
- für den Fall, dass y ≠ 0 ist, eines oder mehrerer Hydroxide des oder der Ionen A,
mit einem Lösungs- und/oder Suspensionsmittel, ausgewählt unter C₁-C₅-Alkoholen, Wasser und Gemischen aus diesen Komponenten, und Zugeben von Wasser, sofern das Lösungsmittel noch kein Wasser enthielt,
b. Zugeben von Kohlenstoff-Partikeln zu der Lösung gemäß a., die eine Oberfläche von mindestens 1000 m²g⁻¹ besitzen und im gewählten Lösungsmittel unlöslich sind
c. Behandeln der gemäß b. entstandenen Suspension in einem Autoklaven bei über 100°C, vorzugsweise für mehrere Stunden,
d. Entspannen des Autoklaven, Abkühlen der Mischung,
e. Abtrennen der entstandenen Partikel vom Lösungsmittel,
f. Trocknen der Partikel, insbesondere bei einer erhöhten Temperatur, und
g. Tempern der Partikel bei Temperaturen bis zu 500°C unter Luft und/oder bis zu 600°C unter einem Inertgas, insbesondere Stickstoff oder Argon.

2. Verfahren nach Anspruch 1 zur Herstellung von Li₄Ti₅O₁₂.

3. Verfahren nach Anspruch 1 oder 2, worin die beiden Hydroxygruppen in dem organischen Diol an Kohlenstoffatome gebunden sind, die in 1,3-Stellung zueinander stehen und/oder worin das Diol ein C₄-C₈-Alkohol mit einer durchgehenden Kettenlänge von bis zu 6 C-Atomen und ganz besonders bevorzugt 2-Methyl-2,4-pentandiol ist.

4. Verfahren zum Herstellen eines partikelförmigen Hybridmaterials zum Einsatz in der positiven Elektrode von Lithiumbatterien und -akkumulatoren, umfassend Teilchen mit einem Grundgerüst aus Kohlenstoff, die mit einer phasenreinen Beschichtung aus Li_{1-y}A_{y}Fe₁₋ₓBₓPO₄, versehen sind, worin A ein Alkaliion, ½ Erdalkalimetallion oder 1/3 Ion, ausgewählt unter den Ionen der Lanthaniden La, Ce, Gd, Pr, Nd, Sm, Er ist, B ein Kation ist, ausgewählt unter 2/a Ni, Mn, V, Co, Sn, Ti, Cr, Cu, Sr, Ca, Ba, Zn und Mischungen davon, wobei a die Oxidationszahl des Kations B bedeutet, und x 0 oder eine beliebige Zahl von >0 bis 0,8 und y 0 oder eine beliebige Zahl von >0 bis 1 bedeutet, umfassend die Schritte:
a. Vermischen der folgenden Komponenten:
- Phosphorsäure,
- für den Fall, dass y ≠ 0, eines oder mehrerer Hydroxide des oder der Ionen A
- für den Fall, x ≠ 0, eines oder mehrerer Hydroxide oder Sulfate des oder der Kationen B,
- LiOH,
- Eisen(II)Sulfat,
- eines Antioxidationsmittels,
- eines Komplexierungsmittels,
in einem wässrigen Lösungs- und/oder Suspensionsmittel, ausgewählt unter Wasser und wässrigen C₁-C₅-Alkoholen,
b. Zugeben von Kohlenstoff-Partikeln zu der Lösung gemäß a., die eine Oberfläche von mindestens 1000 m²g⁻¹ besitzen und im gewählten Lösungsmittel unlöslich sind
c. Behandeln der gemäß b. entstandenen Suspension in einem Autoklaven bei über 100°C für mehrere Stunden,
d. Entspannen des Autoklaven, Abkühlen der Mischung,
e. Abtrennen der entstandenen Partikel vom Lösungsmittel, und
f. Trocknen der Partikel.

5. Verfahren nach Anspruch 4 zur Herstellung von LiFePO₄.

6. Verfahren nach Anspruch 4 oder 5, worin das Komplexierungsmittel eine organische Carbonsäure, vorzugsweise eine Monocarbonsäure ist, die stärker bevorzugt ein oder mehrere Ethergruppen und/oder Ketogruppen aufweist, und ganz besonders bevorzugt 2-(Methoxyethoxy)essigsäure ist.

7. Partikelförmiges Hybridmaterial zum Einsatz in einer Elektrode von Lithiumbatterien und -akkumulatoren, umfassend Teilchen mit einem Grundgerüst aus Kohlenstoff, die mit einer phasenreinen Beschichtung aus entweder Li_{4-y}A_{y}Ti₅₋ₓMₓO₁₂, worin das Ion A ausgewählt ist unter ½ Mg, ½ Ca, 1/3 Al oder Mischungen davon, das Übergangsmetallion M ausgewählt ist unter 4/a Ge, Co, Fe, Co, Ni, Mn, Cr, Zr, Mo, V, Ta oder Mischungen davon, wobei a die Oxidationszahl des Übergangsmetallions bedeutet, x 0 oder eine beliebige Zahl von >0 bis 4 ist und y 0 oder eine beliebige Zahl von >0 bis 3 bedeutet, oder Li_{1-y}A_{y}Fe₁₋ₓBₓPO₄, versehen sind, worin ein A ein Alkaliion, ½ Erdalkalimetallion oder 1/3 Ion, ausgewählt unter den Ionen der Lanthaniden La, Ce, Gd, Pr, Nd, Sm, Er ist, B für Ni, Mn, V, Co, Sn, Ti, Cr, Cu, Sr, Ca, Ba, Zn und Mischungen davon steht, x 0 oder eine beliebige Zahl von >0 bis 0,8 bedeutet und y 0 oder eine beliebige Zahl von >0 bis 1 bedeutet.

8. Partikelförmiges Hybridmaterial nach Anspruch 7, worin die Oberfläche des Kohlenstoff-Grundgerüsts mindestens 1000 m²g⁻¹, vorzugsweise mindestens 1300 m²g⁻¹ beträgt, ermittelt nach BET (DIN ISO 9277), und/oder worin die Partikel offene Poren aufweisen, deren Porendurchmesser mindestens 1 nm beträgt, ermittelt gemäß BJH-Porengrößenverteilung (DIN 66134).

9. Partikelförmiges Hybridmaterial nach einem der Ansprüche 7 oder 8, worin das Verhältnis der Masse des Kohlenstoff-Grundgerüsts zur Masse des Materials mit Interkalationseigenschaften zwischen 1:99 bis 99:1, stärker bevorzugt von 20:80 bis 95:5 und besonders bevorzugt von 40:60 bis 90:10 liegt.

10. Verwendung des partikelförmigen Hybridmaterials nach einem der Ansprüche 7 bis 9, zur Herstellung eines oder in einem positiven oder negativen Elektrodenmaterial, wobei das Elektrodenmaterial weiterhin ein Bindemittel sowie gegebenenfalls einen Leitruß aufweist.

11. Verwendung des partikelförmigen Hybridmaterials nach Anspruch 10, wobei das Elektrodenmaterial weiterhin eine Mischung aus Kohlenstoffpartikeln mit einer Oberfläche von mindestens 1000 m²g⁻¹, vorzugsweise von mindestens 1100 m²g⁻¹, gemessen mit der BET-Methode, und/oder von Nanopartikeln aus einem Interkalationsmaterial für Lithium aufweist.

12. Verwendung des partikelförmigen Hybridmaterials nach einem der Ansprüche 10 und 11 in einem Hybridkondensator, umfassend eine erste, positive Elektrode, eine zweite, negative Elektrode, einen Separator sowie einen Elektrolyten, worin die erste und/oder die zweite Elektrode das partikelförmige Hybridmaterial enthält.

13. Verwendung des partikelförmigen Hybridmaterials nach Anspruch 12, worin die erste, positive Elektrode das partikelförmige Hybridmaterial enthält und als zweite, negative Elektrode eine solche eingesetzt wird, die unter Verwendung von Kohlenstoffpartikeln hergestellt wurde, die mit einem Lithium-Interkalationsmaterial beschichtet sind, ausgewählt unter
Li_{4-y}A_{y}Ti₅₋ₓMₓO₁₂ (mit A = Mg, Ca, Al; M = Ge, Co, Fe, Co, Ni, Mn, Cr, Zr, Mo, V, Ta oder eine Kombination davon), worin x und y einen beliebigen Wert haben und gegebenenfalls 0 sein können.

14. Verwendung des partikelförmigen Hybridmaterials nach Anspruch 12, worin die zweite, negative Elektrode das partikelförmige Hybridmaterial enthält und als erste, positive Elektrode eine solche eingesetzt wird, die unter Verwendung von Kohlenstoffpartikeln hergestellt wurde, die mit einem Lithium-Interkalationsmaterial beschichtet sind, ausgewählt unter
(Li,A)(M,B)PO₄ (mit A und/oder B = Alkali-, Erdalkalimetall, La, Ce, Gd, Pr, Nd, Sm, Er; M = Fe, Co, Mn, Ni, Ti, Cu, Zn, Cr oder eine Kombination davon), wobei A und B jeweils fakultative Komponenten sind;
(Li,A)₂(M,B)PO₄F (A oder B = Alkali-, Erdalkalimetall, La, Ce, Gd, Pr, Nd, Sm, Er; M = Fe, Co, Mn, Ni, Ti, Cu oder eine Kombination davon), worin A und B jeweils fakultative Komponenten sind;
Li₃V₂PO₄; LiVPO₄F;
(Li,A)ₓ(M,N)_{z}SiO₄ (mit A = Alkali-, Erdalkalimetall, Bor; N, M= Al, Ti, Co, Fe, Co, Ni, Mn, Cr, Zr, Mo, V, Ta oder eine Kombination davon), worin A eine fakultative Komponente ist und nur ein Element M oder N vorhanden sein muss; und
Li₂₋ₓAₓM_{1-y}N_{y}PO₄F (mit A = Mg, Ca, Al; M, N = Ti, Ge, Co, Fe, Ni, Mn, Cr, Zr, Mo, V, Ta oder eine Kombination davon), worin x und y einen beliebigen Wert haben und gegebenenfalls 0 sein können.

15. Verwendung des partikelförmigen Hybridmaterials nach Anspruch 12, worin die jeweils andere der ersten und der zweiten Elektrode ausgewählt ist unter einer Interkalationselektrode und einer Elektrode aus einem Kohlenstoffmaterial, und/oder worin der Elektrolyt mindestens Lithiumionen und quartäre Ammoniumionen als Kationen und/oder mindestens fluorierte Phosphationen und fluorierte Borationen als Anionen aufweist, vorzugsweise durch Verwendung von Lithiumhexafluorophosphat und Tetraethylammoniumtretrafluoroborat, stärker bevorzugt in einem molaren Verhältnis von 10:1 bis 3:1.
